# EUROPEAN PATENT APPLICATION

(11) **EP 4 394 287 A1**
(43) Date of publication of application: **03.07.2024**
(21) Application number: 21962435.0
(22) Date of filing: 28.10.2021
(51) Int. Cl.: F25D 11/00, F25D 19/00, B60P 3/20

(54) **TRANSPORT REFRIGERATION UNIT**

(71) Applicant: MITSUBISHI HEAVY INDUSTRIES THERMAL SYSTEMS, LTD., Tokyo 100-8332 (JP)
(72) Inventor: PIAO Hailong, Tokyo 100-8332 (JP); JINNO Hiroki, Tokyo 100-8332 (JP); DHARAMSHI Kewal, Tokyo 100-8332 (JP); MATSUMOTO Kyohei, Tokyo 100-8332 (JP)
(74) Representative: Cabinet Beau de Loménie
(86) International application number: PCT/JP2021/039908
(87) International publication number: WO 2023/073889

(57) **Abstract**

This transport refrigeration unit comprises: a casing that has a back-surface plate extending in the vertical direction; and a compressor that is accommodated within the casing, and has an oil reservoir part disposed inclined toward one side in the axial direction and for accumulating refrigeration machine oil. The axis of the compressor is inclined with respect to the back-surface plate such that the oil reservoir part is positioned therebelow.

## Description

### Technical Field

The present disclosure relates to a transport refrigeration unit.

### Background Art

PTL 1 discloses a horizontal-type rotary compressor used in an air conditioner for an automobile and disposed in a horizontal direction. In the compressor, a rotational compression mechanism unit (compressor body), an electric motor, and a baffle plate are incorporated into a cylindrical airtight container. The baffle plate divides an inside of the airtight container into an electric motor chamber accommodating the electric motor and a compressor chamber accommodating the rotational compression mechanism unit. The compressor generates a pressure difference between the electric motor chamber and the compressor chamber, thereby suppressing a possibility that a refrigeration oil inside the compressor chamber moves to the electric motor chamber. In addition, a size of a gap portion between the baffle plate and an inner surface of the airtight container is set to increase the pressure difference between the electric motor chamber and the compressor chamber, thereby further suppressing the possibility that the refrigeration oil moves to the electric motor chamber.

### Citation List

### Patent Literature

[PTL 1] Japanese Unexamined Patent Application Publication No. 2005-147071

### Summary of Invention

### Technical Problem

However, in the compressor disclosed in PTL 1, the electric motor is located extremely downward depending on a posture of a vehicle. Accordingly, in some cases, movement of the refrigeration oil cannot be sufficiently suppressed due to the pressure difference between the electric motor chamber and the compressor chamber. That is, there is room for improvement in that the refrigeration oil is sufficiently supplied to a sliding portion inside the compressor.

In addition, in addition to a structure for generating the pressure difference between the electric motor chamber and the compressor chamber, it is necessary to set the gap portion between the baffle plate and the inner surface of the airtight container to have a proper size. Therefore, there is also a problem in that a structure of the compressor becomes complicated.

The present disclosure is made to solve the above-described problems, and an object of the present disclosure is to provide a transport refrigeration unit which can sufficiently supply a refrigeration oil to a sliding portion inside a compressor with a simple structure regardless of the posture.

### Solution to Problem

In order to solve the above problems, a transport refrigeration unit according to the present disclosure includes a casing including a back surface plate extending in an upward-downward direction, and a compressor accommodated inside the casing, an oil reservoir portion for storing a refrigeration oil being biased to one side in an axial direction. The axis of the compressor is inclined such that the oil reservoir portion is located below the back surface plate.

### Advantageous Effects of Invention

According to the transport refrigeration unit of the present disclosure, a refrigeration oil can be sufficiently supplied to a sliding portion inside a compressor with a simple structure regardless of a posture. Brief Description of Drawings

Fig. 1 is a perspective view illustrating a schematic configuration of a refrigerated vehicle including a transport refrigeration unit according to an embodiment of the present disclosure.
Fig. 2 is a perspective view of the refrigeration unit body according to the embodiment of the present disclosure.
Fig. 3 is a view when an indoor unit and the refrigeration unit body according to the embodiment of the present disclosure are internally viewed from above.
Fig. 4 is a view when the refrigeration unit body according to the embodiment of the present disclosure is viewed from a front side.
Fig. 5 is a view when the refrigeration unit body according to the embodiment of the present disclosure is internally viewed from a right side.

### Description of Embodiments

### (Refrigerated Vehicle)

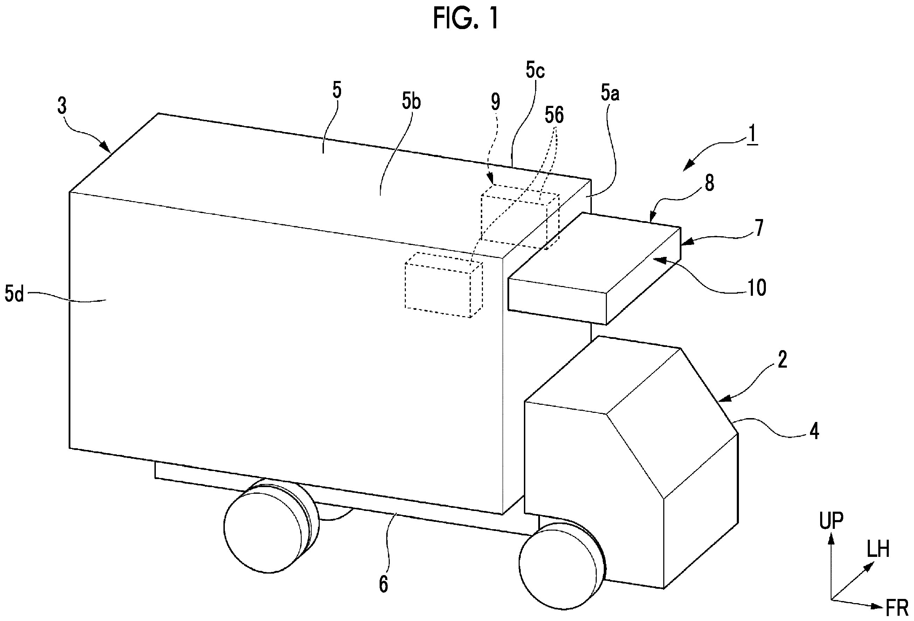

Hereinafter, a refrigerated vehicle 1 according to an embodiment of the present disclosure will be described with reference to Figs. 1 to 5.

As illustrated in Fig. 1, the refrigerated vehicle 1 includes a tractor 2, a trailer 3, and a transport refrigeration unit 7.

Hereinafter, a vertically upward-downward direction will be simply referred to as an "upward-downward direction", one of directions perpendicular to the upward-downward direction will be referred to as a "forward-rearward direction", and a direction perpendicular to the upward-downward direction and the forward-rearward direction will be referred to as a "rightward-leftward direction". An orientation of the refrigerated vehicle 1 coincides with the forward-rearward direction. The forward, rearward, rightward, and leftward are determined with reference to a driver's seat of the refrigerated vehicle 1.

The tractor 2 includes a cab 4 serving as the driver's seat, and runs by using a traveling engine (not illustrated). The tractor 2 pulls the trailer 3.

The trailer 3 includes a trailer body 5 and a chassis 6.

The trailer body 5 is a box-shaped container supported from below by the chassis 6. The trailer body 5 extends in the forward-rearward direction. A space for accommodating a cargo (not illustrated) is formed inside the trailer body 5.

The trailer body 5 includes a front wall 5a disposed on the tractor 2 side, a top wall 5b connected to an upper end of the front wall 5a, a left wall 5c connected to a left end of the front wall 5a and a left end of the top wall 5b, and a right wall 5d connected to a right end of the front wall 5a and a right end of the top wall 5b.

### (Transport Refrigeration Unit)

The transport refrigeration unit 7 includes a refrigeration unit body 8 and an indoor unit 9.

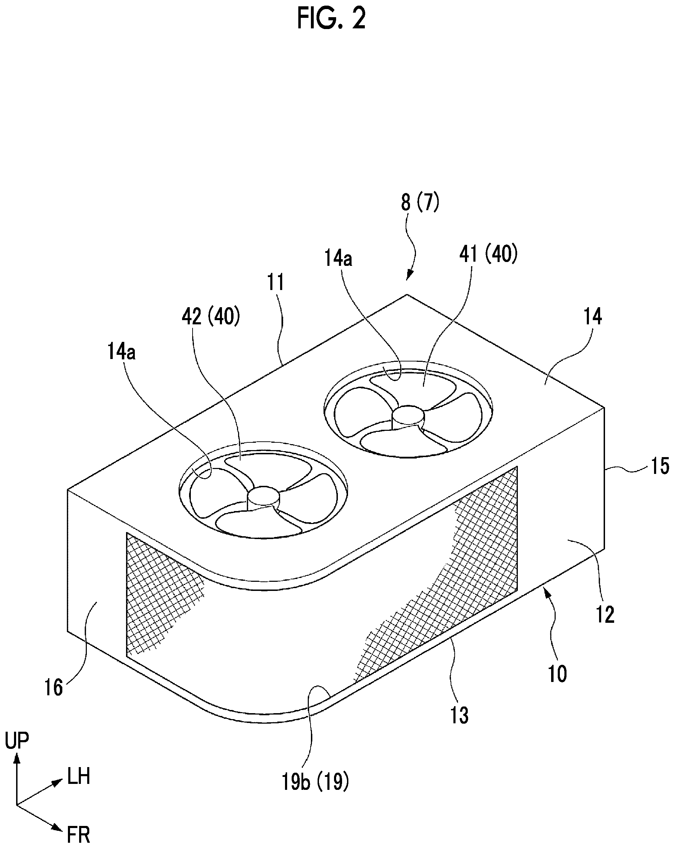

The refrigeration unit body 8 is disposed on an outer side of the trailer body 5. The refrigeration unit body 8 is fixed to an upper portion of a front surface of the front wall 5a of the trailer body 5. As illustrated in Figs. 2 to 4, the refrigeration unit body 8 includes a casing 10, an accumulator 53, a compressor 51, a rear fixing portion 71, a front fixing portion 72, a fan 40, an outdoor heat exchanger 52, a receiver 54, an electric box 20, and a heat sink 30. A space for accommodating devices forming the refrigeration unit body 8 is formed inside the casing 10.

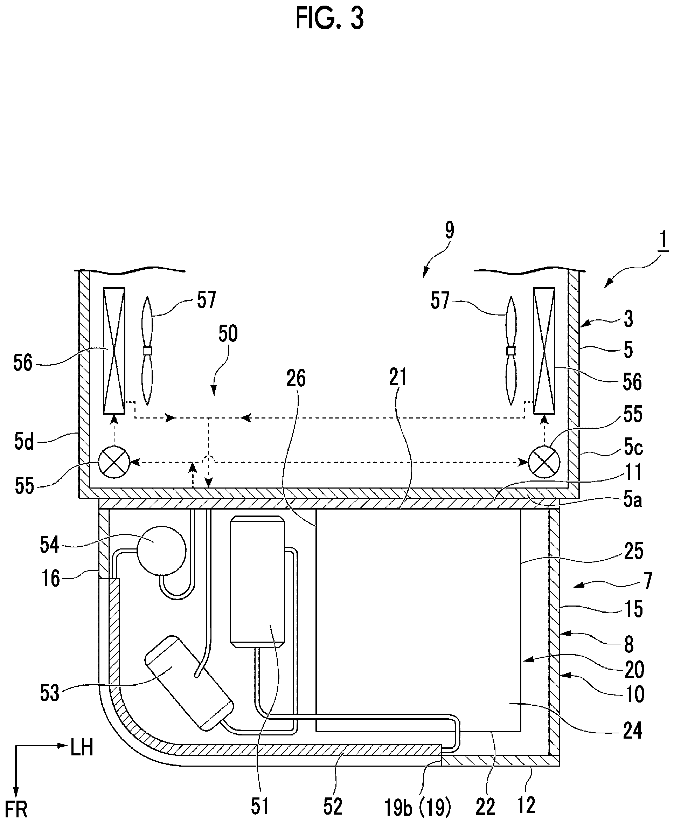

As illustrated in Fig. 3, the indoor unit 9 includes an expansion valve 55, an indoor heat exchanger 56, and an indoor fan 57.

A cooling cycle 50 of the transport refrigeration unit 7 includes the accumulator 53, the compressor 51, the outdoor heat exchanger 52, the receiver 54, the expansion valve 55, the indoor heat exchanger 56, and the indoor fan 57.

The accumulator 53 is accommodated inside the casing 10. The accumulator 53 is connected to the indoor heat exchanger 56 in a state where a refrigerant passing through the inside of the indoor heat exchanger 56 can be received.

The compressor 51 is provided inside the casing 10, and is connected to the accumulator 53. The compressor 51 compresses a gas-phase refrigerant supplied from the accumulator 53.

The fan 40 is accommodated inside the casing 10. The fan 40 takes air into the casing 10, and discharges the air inside the casing 10 to the outside.

The outdoor heat exchanger 52 is accommodated inside the casing 10. The outdoor heat exchanger 52 is connected to the compressor 51 in a state where the refrigerant compressed by the compressor 51 can be received. The outdoor heat exchanger 52 is a condenser that uses outside air taken into the casing 10 by the fan 40 to cool and condense the gas-phase refrigerant supplied from the compressor 51. The gas-phase refrigerant supplied from the compressor 51 is changed to a liquid-phase refrigerant by the outdoor heat exchanger 52. The outdoor heat exchanger 52 is connected to the receiver 54 in a state where the cooled refrigerant can be supplied to the receiver 54.

The receiver 54 is accommodated inside the casing 10. The receiver 54 temporarily stores the liquid-phase refrigerant supplied from the outdoor heat exchanger 52, and absorbs fluctuations in a flow rate of the refrigerant in the cooling cycle 50. The receiver 54 is connected to the expansion valve 55 in a state where the stored liquid-phase refrigerant can be supplied.

The expansion valve 55 is accommodated inside the trailer body 5. The expansion valves 55 are provided one by one on a left side and a right side inside the trailer body 5. The two expansion valves 55 are disposed at symmetrical positions when viewed from above, and have the same configuration. Hereinafter, the expansion valve 55 on the left side in the two expansion valves 55 will be described, and the expansion valve 55 on the right side will be omitted in the description.

The expansion valve 55 is disposed in an upper portion (portion close to the top wall 5b) of a corner portion formed by the left wall 5c and the front wall 5a. The expansion valve 55 expands (decompresses) the liquid-phase refrigerant supplied from the receiver 54. The expansion valve 55 is connected to the indoor heat exchanger 56 in a state where the expanded liquid-phase refrigerant can be supplied to the indoor heat exchanger 56.

The indoor heat exchanger 56 is accommodated inside the trailer body 5. The indoor heat exchangers 56 are provided one by one on the left side and the right side inside the trailer body 5. The two indoor heat exchangers 56 are disposed at symmetrical positions when viewed from above, and have the same configuration. Hereinafter, the indoor heat exchanger 56 on the left side in the two indoor heat exchangers 56 will be described, and the indoor heat exchanger 56 on the right side will be omitted in the description.

The indoor heat exchanger 56 is disposed close to the expansion valve 55. The indoor heat exchanger 56 is an evaporator that evaporates the liquid-phase refrigerant by exchanging heat between the air around the indoor heat exchanger 56 and the liquid-phase refrigerant supplied from the expansion valve 55. The gas-phase refrigerant supplied from the expansion valve 55 is changed to the liquid-phase refrigerant by the indoor heat exchanger 56. In this case, the heat of the air around the indoor heat exchanger 56 is absorbed by the refrigerant. In this way, the air around the indoor heat exchanger 56 is cooled.

The indoor fan 57 is accommodated inside the trailer body 5. The indoor fans 57 are provided one by one on the left side and the right side inside the trailer body 5. The two indoor fans 57 are disposed at symmetrical positions when viewed from above, and have the same configuration. Hereinafter, the indoor fan 57 on the left side of the two indoor fans 57 will be described, and the indoor fan 57 on the right side will be omitted in the description.

The indoor fan 57 is disposed close to the indoor heat exchanger 56. The indoor fan 57 circulates the air cooled by the indoor heat exchanger 56 inside the trailer body 5 to cool the inside of the trailer body 5.

### (Details of Refrigeration Unit Body)

Hereinafter, details of the refrigeration unit body 8 will be described with reference to Figs. 2 to 5.

### (Casing)

As illustrated in Figs. 2 to 5, the casing 10 is formed in a cubic shape. The casing 10 includes a back surface plate 11 fixed to a front surface of the front wall 5a of the trailer body 5 and extending in the upward-downward direction, a front surface plate 12 disposed to face the back surface plate 11 in the forward-rearward direction, a lower surface plate 13 connected to lower ends of the back surface plate 11 and the front surface plate 12, an upper surface plate 14 connected to an upper end of the front surface plate 12 of the back surface plate 11, and a left surface plate 15 and a right surface plate 16 which are disposed to face each other in the rightward-leftward direction and are connected to the back surface plate 11, the front surface plate 12, the lower surface plate 13, and the upper surface plate 14. In addition, the casing 10 is provided with an intake port 19 which can introduce the outside air into the casing 10. The intake port 19 includes a cooling intake port 19a and a main intake port 19b.

The casing 10 is formed in a thin shape in the upward-downward direction. For example, the casing 10 is formed such that a height in the upward-downward direction has a ratio of 500 or lower, compared to a width in the rightward-leftward direction and a depth in the forward-rearward direction.

The lower surface plate 13 extends forward from the lower end of the back surface plate 11. A plate thickness direction of the lower surface plate 13 coincides with the upward-downward direction. The lower surface plate 13 is provided with a cooling intake port 19a penetrating the lower surface plate 13 and introducing the air into the casing 10.

The lower surface plate 13 is formed integrally with the back surface plate 11, and is formed in an L-shape when viewed in the rightward-leftward direction together with the back surface plate 11. The lower surface plate 13 together with the back surface plate 11 functions as a main frame that supports an object accommodated inside the casing 10.

The plate thickness direction of the upper surface plate 14 coincides with the upward-downward direction. The upper surface plate 14 is provided with two discharge ports 14a penetrating the upper surface plate 14 and discharging the air from the inside to the outside of the casing 10. The two discharge ports 14a are provided on the left side and the right side of the upper surface plate 14. The discharge port 14a on the left side is provided to face the cooling intake port 19a in the upward-downward direction. The discharge port 14a penetrates the upper surface plate 14 in the upward-downward direction. The discharge port 14a is formed in a circular shape when viewed in the upward-downward direction.

The front surface plate 12 and the right surface plate 16 are provided with the main intake port 19b for introducing the air into the casing 10. The main intake port 19b is formed in an L-shape when viewed in the upward-downward direction, and continuously extends from the front surface plate 12 throughout the right surface plate 16. The main intake port 19b penetrates the front surface plate 12 and the right surface plate 16. In addition, a wire net is mounted on the main intake port 19b (refer to Fig. 2).

The accumulator 53, the compressor 51, the receiver 54, the electric box 20, the heat sink 30, the outdoor heat exchanger 52, and the fan 40 are accommodated inside the casing 10 described above. More specifically, the accumulator 53, the compressor 51, and the receiver 54 are provided in a space on the right side inside the casing 10. The electric box 20 and the heat sink 30 are provided in a space on the left side inside the casing 10. In addition, the outdoor heat exchanger 52 is provided at a position facing the main intake port 19b inside the casing 10, and the fan 40 is provided at a position facing the discharge port 14a inside the casing 10.

### (Electric Box)

The electric box 20 is biased to one side (left side) in the rightward-leftward direction inside the casing 10. The electric box 20 is disposed between the cooling intake port 19a and the discharge port 14a on the left side. A space which can accommodate various devices is formed inside the electric box 20. The electric box 20 accommodates electric components (not illustrated) such as a power source of an inverter or a converter and power drive system components. The electric box 20 includes a back plate 21 disposed to face the back surface plate 11 of the casing 10, a front plate 22 disposed to face the back plate 21 in the forward-rearward direction, a lower plate 23 connected to the lower end of the back plate 21 and the front plate 22, an upper plate 24 connected to the upper end of the front plate 22 of the back plate 21, and a left plate 25 and a right plate 26 which are disposed to face each other in the rightward-leftward direction and connected to the back plate 21, the front plate 22, the lower plate 23, and the upper plate 24.

The lower plate 23 is disposed in a state of floating upward from the lower surface plate 13 of the casing 10. The lower plate 23 is disposed to cover the cooling intake port 19a of the casing 10. The lower plate 23 is formed in a rectangular plate shape in which the forward-rearward direction is set as the longitudinal direction.

The heat of the electric component accommodated inside the electric box 20 is transferred to the lower plate 23. Therefore, a lower surface of the lower plate 23 is provided at a position facing the cooling intake port 19a, and becomes a cooling target surface 27 cooled in such a manner that the air introduced into the casing 10 through the cooling intake port 19a is blown to cooling target surface 27.

The upper plate 24 is formed in a rectangular plate shape, and is disposed to be inclined downward as the upper plate 24 is directed forward.

Rear end portions of the left plate 25 and the right plate 26 are fixed to the back surface plate 11 of the casing 10 by a fixing member (not illustrated). Front end portions of the left plate 25 and the right plate 26 are fixed to the lower surface plate 13 of the casing 10 by a fixing member (not illustrated).

### (Heat Sink)

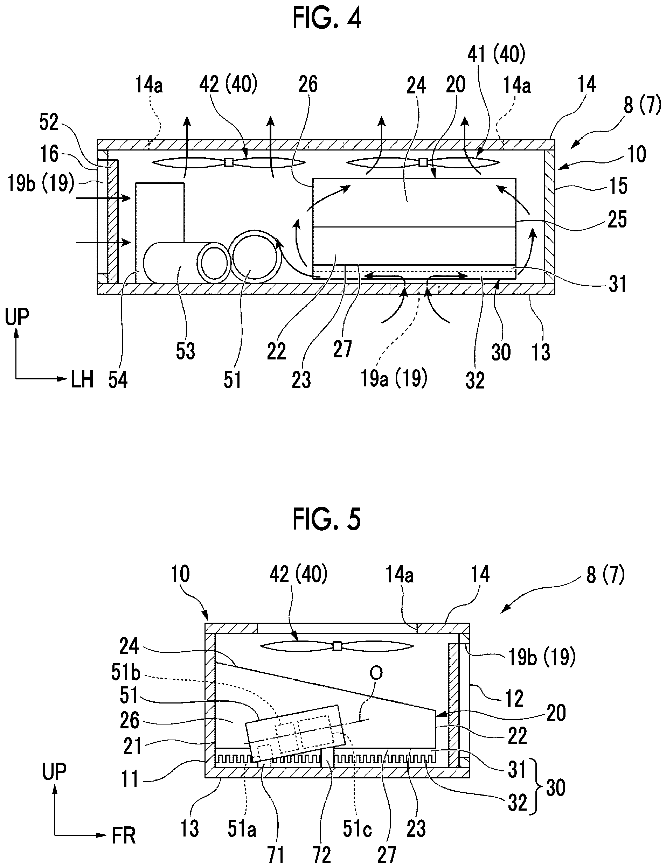

As illustrated in Figs. 4 and 5, the heat sink 30 is provided to be interposed between the cooling target surface 27 of the electric box 20 and the cooling intake port 19a of the casing 10. The heat sink 30 includes a cooling plate 31 and a plurality of fins 32.

The cooling plate 31 is provided along the cooling target surface 27 of the electric box 20. The cooling plate 31 is fixed to the electric box 20 in a state where the upper surface is in close contact with the cooling target surface 27.

The plurality of fins 32 are arranged to protrude from the cooling plate 31 and to extend along the cooling plate 31. An extending direction of the fin 32 coincides with the rightward-leftward direction.

### (Compressor)

The compressor 51 is biased to the other side (right side) in the rightward-leftward direction inside the casing 10. In addition, the compressor 51 is biased rearward in the forward-rearward direction inside the casing 10. For example, the compressor 51 is a rotary compressor. The compressor 51 is formed in a columnar shape. The compressor 51 internally includes a space that can accommodate various members forming the compressor 51. An oil reservoir portion 51a, a compressor body 51b, and an electric motor 51c are accommodated inside the compressor 51. The axis of the compressor 51 linearly extends in one direction. In the compressor 51, the oil reservoir portion 51a is biased to one side in a direction of an axis O. The oil reservoir portion 51a, the compressor body 51b, and the electric motor 51c are disposed inside the compressor 51 in a direction from one side to the other side of the axis O in this alignment order. The axis O of the compressor 51 is inclined such that the oil reservoir portion 51a is located below the back surface plate 11 of the casing 10. Therefore, the oil reservoir portion 51a is located below the compressor body 51b and the electric motor 51c.

The axis O of the compressor 51 extends in the forward-rearward direction, and is inclined to be located above as the axis O is directed forward. The compressor 51 is disposed such that one side in the direction of the axis O in which the oil reservoir portion 51a is provided is located rearward.

A refrigeration oil is stored in the oil reservoir portion 51a. The refrigeration oil is pumped up from the oil reservoir portion 51a, and is supplied to the compressor body 51b and the electric motor 51c. The electric motor 51c is rotated around the axis O. The compressor body 51b internally includes an eccentric portion (not illustrated) connected to the electric motor 51c. The eccentric portion of the compressor body 51b is rotated around the axis 0 by a driving force of the electric motor 51c. In this manner, a compression chamber for compressing a gas-phase refrigerant in the cooling cycle 50 (refer to Fig. 3) is formed inside the compressor body 51b.

Inside the compressor 51, the sliding portions of the compressor body 51b and the electric motor 51c are lubricated by the refrigeration oil supplied from the oil reservoir portion 51a.

### (Rear Fixing Portion)

The rear fixing portion 71 is provided in a rear portion of the compressor 51. The rear fixing portion 71 is provided between the compressor 51 and the lower surface plate 13 of the casing 10. The rear fixing portion 71 fixes the compressor 51 to the lower surface plate 13.

### (Front Fixing Portion)

The front fixing portion 72 is provided in a front portion of the compressor 51. The front fixing portion 72 is provided between the compressor 51 and the lower surface plate 13 of the casing 10. The front fixing portion 72 fixes the compressor 51 to the lower surface plate 13 in front of the rear fixing portion 71.

### (Outdoor Heat Exchanger)

The outdoor heat exchanger 52 is provided between the electric box 20 and the main intake port 19b. The outdoor heat exchanger 52 is formed to have the same shape as the main intake port 19b when viewed in the upward-downward direction. For example, the outdoor heat exchanger 52 is formed in an L-shape when viewed in the upward-downward direction. The outdoor heat exchanger 52 exchanges the heat between the air introduced from the main intake port 19b and the refrigerant flowing through the cooling cycle 50.

The outdoor heat exchanger 52 is disposed to face the main intake port 19b throughout the main intake port 19b. The compressor 51 faces the main intake port 19b via the outdoor heat exchanger 52. Furthermore, the right side of the electric box 20 faces the main intake port 19b via the outdoor heat exchanger 52.

### (Fan)

The fan 40 is provided on a side opposite to the cooling target surface 27 of the electric box 20. The fan 40 discharges the air inside the casing 10 to the outside. The fan 40 includes a first fan 41 disposed to face the discharge port 14a on the left side in the two discharge ports 14a of the casing 10, and a second fan 42 disposed to face the discharge port 14a on the right side. An axial direction of the fan 40 coincides with the upward-downward direction.

The first fan 41 is provided on a side opposite to the cooling intake port 19a with the electric box 20 interposed therebetween.

The second fan 42 faces the accumulator 53, the compressor 51, and the receiver 54.

### (Operational Effects)

In the transport refrigeration unit 7 described above, the air inside the casing 10 flows as follows.

As illustrated in Figs. 4 and 5, when the fan 40 is operated, the air inside the casing 10 is discharged to the outside, and the air is introduced into the casing 10 through the intake port 19.

The air introduced into the casing 10 from the cooling intake port 19a of the intake ports 19 is blown to the cooling plate 31 of the heat sink 30. The air blown to the cooling plate 31 flows along the fins 32, and is guided to both end portions of the cooling plate 31 in the rightward-leftward direction. The air guided to both end portions in the rightward-leftward direction of the cooling plate 31 flows to bypass the electric box 20. More specifically, the air flows along the left wall 5c or the right wall 5d of the electric box 20. Thereafter, the air flows along inclination of the upper plate 24 of the electric box 20, and is suctioned into the fan 40 disposed in the upper portion of the casing 10. The air introduced into the casing 10 from the cooling intake port 19a and bypassing the electric box 20 is mainly suctioned into the first fan 41 in the fan 40. The air suctioned into the fan 40 is discharged to the outside of the casing 10 through the discharge port 14a.

In addition, the air introduced into the casing 10 from the main intake port 19b of the intake ports 19 passes through the outdoor heat exchanger 52. The air passing through the outdoor heat exchanger 52 flows along the front surface of the compressor 51 or the electric box 20. The compressor 51 and the electric box 20 are cooled by the air flowing along the front surface. Thereafter, the air is suctioned into the fan 40 disposed in the upper portion of the casing 10. The air suctioned into the fan 40 is discharged to the outside of the casing 10 through the discharge port 14a.

In the present embodiment, the oil reservoir portion 51a is biased to one side in the direction of the axis O of the compressor 51. The axis O of the compressor 51 is inclined such that the oil reservoir portion 51a is located below the back surface plate 11 of the casing 10.

In this manner, even when the casing 10 is in a posture inclined with respect to a horizontal plane, it is possible to suppress a possibility that the oil reservoir portion 51a is located above the compressor 51. That is, the oil reservoir portion 51a is located above the compressor body 51b and the electric motor 51c. Therefore, it is possible to suppress a possibility that the refrigeration oil stored in the oil reservoir portion 51a flows downward due to gravity. Therefore, it is possible to suppress a decrease in the amount of the oil stored in the oil reservoir portion 51a.

For example, when the refrigerated vehicle 1 on which the transport refrigeration unit 7 is mounted runs, it is expected that the posture of the casing 10 is constantly changed due to inclination of a road on which the refrigerated vehicle 1 travels. However, in the present embodiment, the oil reservoir portion 51a is disposed below the compressor 51. In this manner, even when the posture of the casing 10 is changed by driving of the refrigerated vehicle 1, it is possible to suppress the decrease in the amount of the oil stored in the oil reservoir portion 51a. Therefore, regardless of the posture of the casing 10, the refrigeration oil can be pumped from the oil reservoir portion 51a with a simple structure in which the oil reservoir portion 51a is disposed below the compressor 51. Therefore, regardless of the posture of the casing 10, the refrigeration oil can be sufficiently supplied to the sliding portions of the compressor body 51b, the electric motor 51c, and the like in the compressor 51.

In this manner, the compressor 51 can be mounted as the horizontal-type compressor 51 disposed in the horizontal direction. Therefore, the casing 10 can be formed in a thinner shape in the upward-downward direction. Therefore, as in the present embodiment, when mounted on an outer surface of the trailer 3, the refrigeration oil can be sufficiently supplied to the sliding portion inside the compressor 51, and air resistance received by the casing 10 during traveling of the refrigerated vehicle 1 can be reduced.

In the present embodiment, the axis O of the compressor 51 extends in the forward-rearward direction. The transport refrigeration unit 7 further includes the rear fixing portion 71 that fixes the compressor 51 to the lower surface plate 13 of the casing 10, and the front fixing portion 72 that fixes the compressor 51 to the lower surface plate 13 in front of the rear fixing portion 71.

When the back surface plate 11 of the casing 10 is fixed to the front surface of the trailer 3, the casing 10 is supported by a cantilever. In this case, there is a possibility that the lower surface plate 13 of the casing 10 is bent due to all loads of the casing 10 and objects accommodated inside the casing 10.

According to the present embodiment, the compressor 51, the rear fixing portion 71, the front fixing portion 72, and the lower surface plate 13 are annularly connected when viewed in the rightward-leftward direction. Therefore, the compressor 51 can function as a strength member of the lower surface plate 13. Therefore, it is possible to suppress a possibility that the lower surface plate 13 of the casing 10 is bent. Therefore, the strength of the casing 10 can be further improved.

In addition, the axis O of the compressor 51 extends in the forward-rearward direction. Therefore, the compressor 51 is disposed to extend in an orientation of the refrigerated vehicle 1. Therefore, the oil reservoir portion 51a inside the compressor 51 can more preferably maintain the downward arrangement in the compressor 51 with respect to a change in the posture of the casing 10 due to the running of the refrigerated vehicle 1.

In the present embodiment, the compressor 51 is biased to the rear side in the forward-rearward direction inside the casing 10. In addition, the compressor 51 is disposed such that the axis O extends in the forward-rearward direction and one side in the direction of the axis O in which the oil reservoir portion 51a is provided is located rearward. The refrigeration oil is stored in the oil reservoir portion 51a. Therefore, the oil reservoir portion 51a tends to be heavier, compared to other portions of the compressor 51. Therefore, according to the present embodiment, the center of gravity of the compressor 51 can be brought close to the back surface plate 11 of the casing 10. In this manner, when the casing 10 is supported by the cantilever in the back surface plate 11, it is possible to further suppress a possibility that the casing 10 is bent downward.

In the present embodiment, the electric box 20 is biased to the left side inside the casing 10, and the compressor 51 is biased to the right side. The electric box 20 and the compressor 51 face the main intake port 19b via the outdoor heat exchanger 52.

In this manner, the air introduced into the casing 10 and subjected to heat exchange with the refrigerant by the outdoor heat exchanger 52 can be used to cool the electric box 20 and the compressor 51. Therefore, cooling performance of the electric box 20 and the compressor 51 can be improved.

### (Other Embodiments)

Hitherto, the embodiment of the present disclosure has been described in detail with reference to the drawings. However, specific configurations are not limited to the above-described embodiment, and design changes within the scope not departing from the concept of the present disclosure are also included.

In the above-described embodiment, for example, the compressor 51 is the rotary compressor. However, without being limited thereto, the compressor 51 may be a scroll compressor, for example.

In the above-described embodiment, the oil reservoir portion 51a, the compressor body 51b, and the electric motor 51c are disposed from one side toward the other side in the direction of the axis O in this alignment order inside the compressor 51. However, the present disclosure is not limited thereto. The oil reservoir portion 51a may be located below the sliding portions of the compressor body 51b and the electric motor 51c. For example, the oil reservoir portion 51a, the electric motor 51c, and the compressor body 51b may be disposed in the direction from one side toward the other side of the axis O in this alignment order. That is, the compressor body 51b may be disposed above the electric motor 51c.

In the above-described embodiment, the axis O of the compressor 51 extends in the forward-rearward direction, and is inclined upward as the axis O is directed forward. However, the present invention is not limited thereto. For example, the axis O of the compressor 51 may be inclined to be located below as the axis O is directed forward. In this case, the compressor 51 is disposed such that one side in the direction of the axis O in which the oil reservoir portion 51a is provided is located forward.

In the above-described embodiment, the compressor 51 faces the main intake port 19b via the outdoor heat exchanger 52, and the right side of the electric box 20 faces the main intake port 19b via the outdoor heat exchanger 52. However, the present disclosure is not limited thereto. Only one of the compressor 51 and the outdoor heat exchanger 52 may be provided to face the main intake port 19b via the outdoor heat exchanger 52.

### <Additional Notes>

The transport refrigeration unit 7 described in each embodiment is understood as follows, for example.

(1) The transport refrigeration unit 7 according to a first aspect includes the casing 10 including the back surface plate 11 extending in the upward-downward direction, and the compressor 51 accommodated inside the casing 10, the oil reservoir portion 51a for storing the refrigeration oil being biased to one side in the direction of the axis O. The axis O of the compressor 51 is inclined such that the oil reservoir portion 51a is located below the back surface plate 11.
   In this manner, even when the transport refrigeration unit 7 is in a posture inclined with respect to the horizontal plane, it is possible to suppress a possibility that the oil reservoir portion 51a is located above the compressor 51. Therefore, it is possible to suppress a possibility that the refrigeration oil stored in the oil reservoir portion 51a flows downward due to gravity. Therefore, it is possible to suppress a decrease in the amount of the oil stored in the oil reservoir portion 51a.
(2) As the transport refrigeration unit 7 according to a second aspect, in the transport refrigeration unit 7 of (1), the back surface plate 11 may be fixed to the front surface of the trailer 3, and the casing 10 may further include the lower surface plate 13 extending forward from the lower end of the back surface plate 11. The axis O of the compressor 51 may extend in the forward-rearward direction. The transport refrigeration unit 7 may further include the rear fixing portion 71 that fixes the compressor 51 to the lower surface plate 13, and the front fixing portion 72 that fixes the compressor 51 to the lower surface plate 13 in front of the rear fixing portion 71.

When the back surface plate 11 of the casing 10 is fixed to the front surface of the trailer 3, the casing 10 is supported by a cantilever. In this case, there is a possibility that the lower surface plate 13 of the casing 10 is bent due to all loads of the casing 10 and objects accommodated inside the casing 10.

According to this aspect, the compressor 51, the rear fixing portion 71, the front fixing portion 72, and the lower surface plate 13 are annularly connected when viewed in the rightward-leftward direction. Therefore, the compressor 51 can function as a strength member of the lower surface plate 13.

(3) As the transport refrigeration unit 7 according to a third aspect, the transport refrigeration unit 7 of (1) or (2) may further include the intake port 19 formed in the casing 10, the outdoor heat exchanger 52 to face the intake port 19 throughout the intake port 19, and the electric box 20 provided inside the casing 10 and accommodating the electric component. The electric box 20 may be biased to one side in the rightward-leftward direction. The compressor 51 may be biased to the other side in the rightward-leftward direction. At least one of the electric box 20 and the compressor 51 may face the intake port 19 via the outdoor heat exchanger 52.

In this manner, the air introduced into the casing 10 and subjected to heat exchange with the refrigerant by the outdoor heat exchanger 52 can be used to cool at least one of the electric box 20 and the compressor 51.

### Industrial Applicability

The present disclosure relates to a transport refrigeration unit. According to the present disclosure, a refrigeration oil can be sufficiently supplied to a sliding portion inside a compressor with a simple structure regardless of a posture.

### Reference Signs List

- 1:: Refrigerated vehicle
- 2:: Tractor
- 3:: Trailer
- 4:: Cab
- 5:: Trailer body
- 5a:: Front wall
- 5b:: Top wall
- 5c:: Left wall
- 5d:: Right wall
- 6:: Chassis
- 7:: Transport refrigeration unit
- 8:: Refrigeration unit body
- 9:: Indoor unit
- 10:: Casing
- 11:: Back surface plate
- 12:: Front surface plate
- 13:: Lower surface plate
- 14:: Upper surface plate
- 14a:: Discharge port
- 15:: Left surface plate
- 16:: Right surface plate
- 19:: Intake port
- 19a:: Cooling intake port
- 19b:: Main intake port
- 20:: Electric box
- 21:: Back plate
- 22:: Front plate
- 23:: Lower plate
- 24:: Upper plate
- 25:: Left plate
- 26:: Right plate
- 27:: Cooling target surface
- 30:: Heat sink
- 31:: Cooling plate
- 31a:: Fin non-forming region
- 32:: Fin
- 40:: Fan
- 41:: First fan
- 42:: Second fan
- 50:: Cooling cycle
- 51:: Compressor
- 51a:: Oil reservoir portion
- 51b:: Compressor body
- 51c:: Electric motor
- 52:: Outdoor heat exchanger
- 53:: Accumulator
- 54:: Receiver
- 55:: Expansion valve
- 56:: Indoor heat exchanger
- 57:: Indoor fan
- 71:: Rear fixing portion
- 72:: Front fixing portion
- O:: Axis

## Claims

1. A transport refrigeration unit comprising:
a casing including a back surface plate extending in an upward-downward direction; and
a compressor accommodated inside the casing, an oil reservoir portion for storing a refrigeration oil being biased to one side in an axial direction,
wherein the axis of the compressor is inclined such that the oil reservoir portion is located below the back surface plate.

2. The transport refrigeration unit according to Claim 1,
wherein the back surface plate is fixed to a front surface of a trailer, and
the casing further includes a lower surface plate extending forward from a lower end of the back surface plate,
the axis of the compressor extends in a forward-rearward direction, and
the transport refrigeration unit further comprises:
a rear fixing portion that fixes the compressor to the lower surface plate; and
a front fixing portion that fixes the compressor to the lower surface plate in front of the rear fixing portion.

3. The transport refrigeration unit according to Claim 1 or 2, further comprising:
an intake port formed in the casing;
an outdoor heat exchanger to face the intake port throughout the intake port; and
an electric box provided inside the casing and accommodating an electric component,
wherein the electric box is biased to one side in a rightward-leftward direction,
the compressor is biased to the other side in the rightward-leftward direction, and
at least one of the electric box and the compressor faces the intake port via the outdoor heat exchanger.
